# EUROPÄISCHE PATENTSCHRIFT

(11) **EP 1 362 545 B1**
(45) Veröffentlichungstag und Bekanntmachung des Hinweises auf die Patenterteilung: **17.07.2019**
(21) Anmeldenummer: 03006110.5
(22) Anmeldetag: 18.03.2003
(51) Int. Cl.: A47L 15/00

(54) **Verfahren zum Betreiben einer Geschirrspülmaschine**
Method for operating a dishwashing machine
Procédé pour faire fonctionner un lave-vaisselle

(30) Priorität: 16.05.2002 DE 10222215
(43) Veröffentlichungstag der Anmeldung: 19.11.2003
(60) Teilanmeldung: 10011345.5
(73) Patentinhaber: Electrolux Home Products Corporation N.V., 1130 Brussels (BE)
(72) Erfinder: Steiner, Winfried, 90491 Nürnberg (DE); Kohles, Karlheinz, 90461 Nürnberg (DE); Stahlmann, Rolf, 91639 Wolframs-Eschenbach (DE); Füglein, Stefan, 90461 Nürnberg (DE); Forst, Klaus Martin, 90427 Nürnberg (DE)
(74) Vertreter: Electrolux Group Patents

(56) Entgegenhaltungen:
- EP-A- 1 008 324
- DE-A1- 4 214 188
- DE-A1- 19 750 266
- DE-A1- 19 951 839
- US-A- 4 366 005

## Beschreibung

Die Erfindung betrifft ein Verfahren zum Betreiben einer Geschirrspülmaschine gemäß dem Oberbegriff des Anspruches 1.

Bekannterweise wird nach einem Einstellen von verschmutztem Spülgut in eine Geschirrspülmaschine in dafür vorgesehene Aufnahmen, wie z. B. Geschirrkörbe und Besteckkörbe, ein Spülprogramm zum Betreiben der Geschirrspülmaschine durch den Benutzer gestartet. Sind für den Betrieb der Geschirrspülmaschine mehrere verschiedene Spülprogramme vorgesehen, so kann der Benutzer im Allgemeinen durch Auswahlmittel, welche z. B. in einer Bedienblende an der Geschirrspülmaschine angeordnet sind, ein bestimmtes Spülprogramm auswählen. So sind z. B. Spülprogramme unter den Namen Intensivprogramm, Kurzprogramm, Normalprogramm, Sparprogramm und ähnlichen Begriffsbildungen bekannt. Bekannterweise umfasst ein Spülprogramm zumindest mehrere flüssigkeitsführende Verfahrensabschnitte, wie Vorspülen, Reinigen, Zwischenspülen, Klarspülen oder Vorspülen, Reinigen, Klarspülen je mit einem abschließenden nicht flüssigkeitsführenden Abschnitt Trocknen. Im Programmabschnitt Vorspülen findet hauptsächlich ein Einweichen fest anhaftender Spülpartikel am Spülgut und eine mechanische Reinigung leicht ablösbarer Verunreinigungen vom Spülgut statt. In diesem Programmabschnitt werden in der Regel keine chemischen Substanzen zur Verbesserung des Spülergebnisses zudosiert. Im Programmabschnitt Reinigen werden bekannterweise Waschsubstanzen zugesetzt, die entweder nur Substanzen zum An- und Auflösen der anhaftenden Schmutzpartikel während des Programmabschnittes Reinigen beinhalten oder aber in einem Kombinationspräparat, welches eine Waschsubstanz, eine Klarspülersubstanz und eine Enthärtersubstanz umfasst, als sogenannte 3in1-Tabs oder 3in1-Pulver zugesetzt. Im Programmabschnitt Reinigen werden hauptsächlich die am Spülgut anhaftenden Schmutzpartikel entfernt. In einem folgenden Programmabschnitt Zwischenspülen werden letzte Rückstände sowohl von Schmutzpartikeln als auch von chemischen Rückständen der Waschsubstanz entfernt. Durch den Programmabschnitt Klarspülen wird fleckenfreies Abtrocknen des Spülgutes vorbereitet. Der zugesetzte Klarspüler hat bekanntlich die Aufgabe, die Oberflächenspannung des Wassers zu verringern und somit ein besseres Abtropfen des anhaftenden Wassers am Spülgut zu ermöglichen. Im Programmabschnitt Trocknen wird das am Spülgut anhaftende Wasser aus den spülflüssigkeitsführenden Verfahrensabschnitten und die Restfeuchte aus den spülflüssigkeitsführenden Verfahrensabschnitten entfernt.

Für jeden dieser Programmabläufe ist charakteristisch, dass mehrere spülflüssigkeitsführende Programmabschnitte hintereinander geschaltet sind und das Programm durch einen nicht spülflüssigkeitsführenden Programmabschnitt Trocknen beendet wird. Als Programmabschnitte folgen, wie vorstehend geschildert, zumindest jeweils ein Vorspülen, Reinigen, ggf. Zwischenspülen, Klarspülen aufeinander. Wird das Zwischenspülen, wie beispielsweise in der EP 0 553 803 B1 offenbart, weggelassen, so besteht die Gefahr, dass chemische Rückstände an den Spülgutteilen zurückbleiben können, wie in Laborversuchen bereits festgestellt wurde. Ein Ausführen des Zwischenspülganges in bekannter Weise mit kalter Spülflüssigkeit entzieht dem Spülbehälter thermische Energie, die im vorangegangenen Reinigungsgang mit heißer Spülflüssigkeit aufgebaut wurde. Diese thermische Energie muss im nachfolgenden Klarspülgang für die Wirksamkeit des Klarspülers wieder zugesetzt werden, so dass insgesamt ein zu hoher Energieverbrauch zu beklagen ist. Ein Ausführen des Zwischenspülganges statt dessen mit aufgeheizter Spülflüssigkeit, um den Energieentzug zu verhindern, erfordert aber ebenfalls den Einsatz von Heizleistung.

Ein Verfahren zum Betreiben einer Geschirrspülmaschine entsprechend dem Oberbegriff des Anspruchs 1 ist bereits aus der EP 1 008 324 A1 bekannt. Ausgehend von dem geschilderten Stand der Technik ist es Aufgabe der Erfindung ein Verfahren zum Betreiben einer Geschirrspülmaschine vorzuschlagen, bei dem der vorstehend genannte Nachteil vermieden wird und der Energieverbrauch besonders niedrig gehalten ist.

Vorstehend genannte Aufgabe wird durch ein Verfahren zum Betreiben einer Geschirrspülmaschine gemäß dem Kennzeichen des Anspruches 1 gelöst.

Vorteilhafte Ausgestaltung der Erfindung sind in den Unteransprüchen beschrieben.

Gemäß der vorliegenden Erfindung ist bei einem Verfahren zum Betreiben einer Geschirrspülmaschine zum Zwecke der Reinigung darin eingestellten Spülgutes zumindest teilweise im Verlauf eines flüssigkeitsführenden Programmabschnittes mit kalter Spülflüssigkeit, welcher einem Programmabschnitt mit erwärmter Spülflüssigkeit folgt, die Umwälzung der in der Geschirrspülmaschine befindlichen Spülflüssigkeit durch wiederholtes Ein- und Ausschalten der Umwälzpumpe mehrfach unterbrochen. Durch die Unterbrechung des Umwälzens der Spülflüssigkeit ist.das in Bezug auf eine gleich lange Dauer ununterbrochenen Beaufschlagens mit Spülflüssigkeit summarisch mit dem Spülgut in Kontakt tretende Spülflüssigkeitsvolumen als auch die Kontaktzeit der Spülflüssigkeit mit dem Spülgut reduziert. Hierbei ist vorteilhaft, dass die Energieabgabe des aufgeheizten Spülgutes in einem Programmabschnitt, der frische und damit zuleitungstemperaturabhängige, kalte und/oder passiv aufgeheizte lauwarme Spülflüssigkeit zuführt, an die Spülflüssigkeit reduziert wird. In den Sprühpausen kann nämlich die vorher aufgebrachte Spülflüssigkeit zusammen mit mitgenommenen Schmutz- und ggf. Reinigungsmittelrückständen abtropfen, ohne dass in dieser Zeit durch permanentes Weitersprühen thermische Energie abgezogen wird.

Infolge des Ein- und Ausschaltens der Umwälzpumpe verändert sich das Rotationsverhalten der Sprüharme, die im Wesentlichen dem Muster des Ein- und Ausschaltens der Umwälzpumpe folgen, weil sie durch eine Antriebsdüse in Bewegung gesetzt und gehalten werden. Der Sprüharm wird während der Einschaltdauer um einen bestimmten Winkel α in seiner Rotationsebene bewegt und bremst seine kreisförmige Bewegung beim Ausschalten ab. Durch wiederholtes Ein- und Ausschalten verringert sich, bei einer gleich bleibenden Drehzahl der Umwälzpumpe infolge des Einflusses der Massenträgheit, die Umdrehungsgeschwindigkeit des Sprüharmes etwas. In Abhängigkeit einer gewünschten Umdrehungsgeschwindigkeit des Sprüharmes und einer gewünschten Benetzung des eingestellten Spülgutes mit Spülflüssigkeit wird bevorzugt die Dauer des Ein- und Ausschaltens der Umwälzpumpe variiert vorgegeben. Hierbei ist es z. B. alternativ möglich, die Beladungsmenge des Geschirrspülers zu berücksichtigen, sofern eine Ermittlung der Beladungsmenge durchgeführt wird.

Mit besonderem Vorteil wird das Ein- und Ausschalten der Umwälzpumpe mehrfach aufeinander folgend bei kurzer Dauer des Ein- und Ausschaltzustandes, wiederholt, so dass die Umdrehungsgeschwindigkeit des Sprüharmes, die Dauer des Beaufschlagens mit Spülflüssigkeit, welche im Wesentlichen von der Dauer des Einschaltzustandes der Pumpe abhängig sind, als auch das Bewegungsmuster des Sprüharmes, welcher abwechselnd beim Ausschalten der Pumpe abbremst oder steht und beim Einschalten sich um einen vorbestimmbaren Winkelbereich weiterbewegt, periodisch wechselt. Laborversuche haben gezeigt, dass vorzugsweise die Dauer des Ein- und Ausschaltzustandes der Pumpe gleich lang zu wählen ist. Um die Kontaktzeit der Spülflüssigkeit mit dem Spülgut definiert zu verringern aber das Spülgut auch mindestens einmal zu benetzen, sollte dabei prinzipiell mindestens eine vollständige Umdrehung eines Sprüharmes um 360 ° erfolgen. Somit ergibt sich eine entsprechende Mindestdauer des Einschaltzustandes in Gesamtsumme gemäß 360 ° geteilt durch α, multipliziert mit der Dauer eines Einschaltzustandes. Wichtig ist jedoch, dass die Gesamtdauer des Einschaltens der Umwälzpumpe zumindest so lang gewählt wird, dass das gewünschte Spülergebnis des jeweiligen Programmabschnittes erreicht werden kann.

Besonders bevorzugt wird ein abwechselndes Ein- und Ausschalten der Umwälzpumpe mit einer Einschaltdauer, die zwischen 1 bis 10 Sekunden und einer Ausschaltdauer, die zwischen 1 bis 15 Sekunden andauert.

Um sowohl den Wasserverbrauch als auch den Energieverbrauch besonders gut hinsichtlich eines besonders guten Spülergebnisses aufeinander abzustimmen, wird die Anzahl der Wechsel des Ein- und Ausschaltens der Umwälzpumpe und/oder deren Dauer so definiert, dass zum einen ermöglicht ist, die Kontaktzeit der umgewälzten Spülflüssigkeit mit dem zu reinigenden Spülgut zu reduzieren und dass zum anderen die Abhängigkeit der verschiedenen Verschmutzungsgrade des Spülgutes berücksichtigt ist. Sind durch verschiedene Sensoren Messparameter, wie die Trübung der Spülflüssigkeit während des Ablaufes des Spülprogrammes, auch der pH-Wert und andere Messparameter erfassbar, so kann durch die Steuerung des Geschirrspülers die Anzahl der Wechsel des Ein- und Ausschaltens als auch deren Dauer variiert werden. Dies ist besonders sinnvoll, wenn anzunehmen ist, dass unterschiedliche Typen von Kombinationspräparaten mit mehreren Wirkstoffen dem Spülprogramm als chemische Substanzen zugesetzt werden. Denn Kombinationspräparate, die nach einem Verdünnungsprinzip eines umfassten Klarspülers arbeiten, d. h. der Klarspüler wird in den Klarspülabschnitt im Wesentlichen aus dem vorhergehenden Reinigen, ggf. Zwischenspülen verschleppt und verdünnt, werden bevorzugt mit weniger Spülflüssigkeit während der Programmabschnitte, die für den Klarspüler Verdünnungsphasen darstellen, betrieben, als Kombinationspräparate, deren Klarspülersubstanz erst temperatur- und/oder pH-Wertabhängig im Programmabschnitt Klarspülen aufgelöst werden. Infolge der verringerten Kontaktzeit der Spülflüssigkeit mit dem Spülgut, verringern sich die Abkühlvorgänge des Spülgutes, die besonders energetisch ungünstig sind, wenn kalte Spülflüssigkeit dem Geschirrspüler zugeführt wird und diese sich nur passiv u. a. am aufgeheizten Spülgut erwärmt.

Um ein gutes Reinigungsergebnis zu erzielen ist es erforderlich, dass das in die Geschirrspülmaschine eingestellte Spülgut ausreichend mit Spülflüssigkeit beaufschlagt wird. Hierzu muss der Sprüharm sich zumindest insgesamt einmal vollständig um seine Rotationsachse, d. h. um 360 ° in seiner Rotationsebene, gedreht haben.

Durch das wiederholte Ein- und Ausschalten der Umwälzpumpe entsteht ein impulsartiges Beaufschlagen des Spülgutes mit Spülflüssigkeit. Diese Art des Aufbringens der umgewälzten Spülflüssigkeit kann mit vollständig frisch zugeführter Spülflüssigkeit oder aus einem Verschnitt von verschmutzter Spülflüssigkeit aus dem vorher gehenden Programmabschnitt mit frisch zugeführter Spülflüssigkeit durchgeführt werden. Dies hat insbesondere auch eine Einsparung von Wasser zur Folge. Die aufgenommene Energie der verdünnten Spülflüssigkeit, die durch die Verdünnung weniger verschmutzt ist, bleibt dem System des Geschirrspülers zumindest teilweise erhalten, so dass nach dem Verschnitt mit frischer Spülflüssigkeit eine höhere Mischtemperatur der Spülflüssigkeit vorhanden ist, als wenn dem Geschirrspüler vollständig frische Spülflüssigkeit, die im Wesentlichen zuleitungstemperaturabhängig ist, zugeführt wird.

Das Verhältnis der Verschnittmengen, d. h. das Bestimmen des Volumens der abzupumpenden und frisch zugeführten Spülflüssigkeit, kann in Abhängigkeit der Drehzahl der Umwälzpumpe, des Verhältnisses der Impulsdauer des Ein- und Ausschaltens der Umwälzpumpe als auch einem vorgebbaren minimalen Füllstandsniveau der Spülflüssigkeit im Spülbehälter, besonders unter wassereinsparenden und energetischen Gesichtspunkten, minimiert werden. So ist es z. B. sinnvoll, bei einem Gesamtfüllvolumen mit Spülflüssigkeit, das im Programmabschnitt Reinigen bzgl. eines oberen maximalen Spülflüssigkeitsvolumen bei ca. 4 l (12 Normgedecke) zur kontinuierlichen Beaufschlagung des Spülgutes bemessen ist, dass im Programmabschnitt Zwischenspülen, in dem ein Impulsspülen der o. g. Art durchführt wird, das maximale Spülflüssigkeitsvolumen zu verringern. Denn infolge des Ein- und Ausschaltens der Umwälzpumpe wird weniger Spülflüssigkeit zum Beaufschlagen des Spülgutes benötigt. Wird das Volumen hierdurch reduziert, reduziert sich natürlich auch dessen Energieaufnahme. Dies ist mit besonders hohen Energieeinsparungen verbunden, wenn kalte Spülflüssigkeit zugeführt wird. Je länger das Ausschalten dauert, desto mehr umgewälzte Spülflüssigkeit kann vom Spülgut und den Wänden und der Decke des Spülbehälters während des Ausschaltens der Umwälzpumpe abtropfen, so dass durch einen kürzeren Einschaltzustand als Ausschaltzustand der Pumpe insgesamt sich das maximal notwendige Spülflüssigkeitsvolumen nochmals etwas reduziert. Es sei hier ferner erwähnt, dass infolge der Reduzierung des Spülflüssigkeitsvolumens die Verdünnung, insbesondere der gelösten Substanzen eines Kombinationspräparates, verringert wird. In Abhängigkeit verschiedener Messungen durch Sensoren kann somit auch auf das Lösungsverhalten bzw. die Konzentration der Substanzen Einfluss genommen werden.

Ist zumindest eine Trübungsmessung durch einen vorgesehenen Trübungssensor während eines Verfahrensabschnittes vorgesehen, so kann das Volumen der abzupumpenden und wieder zuzuführenden Spülflüssigkeit vorteilhaft in Abhängigkeit des Verschmutzungsgrades getroffen werden. Dies verbessert das Reinigungsergebnis und senkt den Energieverbrauch und den Wasserverbrauch weiter.

Wird ein Programm in der Abfolge der flüssigkeitsführenden Programmabschnitte Vorspülen, Reinigen, Zwischenspülen, Klarspülen betrieben, so ist es hinsichtlich der Verbesserung des Wasser- und Energieverbrauches als auch im Hinblick auf ein besonders gutes Spülergebnis sinnvoll, vorzugsweise nur das Zwischenspülen in der vorstehend beschriebenen Art des Impulsspülens zu betreiben. Denn in dieser Phase wird aufgrund des passiven Aufheizens der Spülflüssigkeit den Wärmekapazitäten des Geschirrspülers die größte Energie entzogen und das erforderliche Volumen Spülflüssigkeit, das nur zum Abspülen letzter Schmutzpartikel und chemischer Rückstände während des voran gehenden Programmabschnittes Reinigen ausreichend bemessen sein muss, erfordert eine gegenüber den Programmabschnitten, Vorspülen, Reinigen und Klarspülen wesentlich geringeres Gesamtvolumen an Spülflüssigkeit. Soll das Impulsspülen auch in den Verfahrensabschnitten Vorspülen, Reinigen und Klarspülen eingesetzt werden, so ist eine Verlängerung dieser Programmabschnitte zum Erreichen eines guten Spülergebnisses, insbesondere für das An- und Ablösen der Schmutzpartikel bzw. zum Aufheizen des Spülgutes, unabdingbar.

In Abhängigkeit des Lösungsverhaltens eines Klarspülers in einem Kombinationspräparat kann es für das Ergebnis des Trocknens vorteilhaft sein, in einem Teilabschnitt des Zwischenspülens vorgesehene Heizmittel, insbesondere am Ende des Zwischenspülens, kurzfristig einzuschalten, vor allem dann, wenn dieser Verfahrensabschnitt durch einen Verdünnungsschritt beendet wird, so dass die vorgeheizte Spülflüssigkeit, zumindest teilweise, im darauf folgenden Verfahrensabschnitt Klarspülen vorgeheizt ist, so dass ein pH-Wert- und temperaturabhängig auflösender Klarspüler schneller aufgelöst und somit länger während des Programmabschnittes Klarspülen umgewälzt wird.

Die Erfindung ist im Folgenden anhand der Zeichnungen eines Ausführungsbeispieles näher erläutert. Dabei zeigen:
- - Fig. 1: einen zeitlichen Ablauf eines Spülprogrammes mit den Programmabschnitten Vorspülen mit einem Verdünnungsschritt, Reinigen, Zwischenspülen mit einem Verdünnungsschritt, Klarspülen;
- - Fig. 2: ein zum Zeitverlauf der Fig. 1 korrespondierendes Impulsmuster des Ein- und Ausschaltzustandes der Umwälzpumpe; und
- - Fig. 3: eine alternative Impulsfolge des Ein- und Ausschaltzustandes der Umwälzpumpe gemäß Abschnitt D-E in Fig. 2.

In einer Haushalt-Geschirrspülmaschine ist Spülgut mittels eines wählbaren Spülprogrammes reinigbar. Ein besonders sparsames Spülprogramm mit besonders geringem Energieverbrauch ist im Folgenden skizziert.

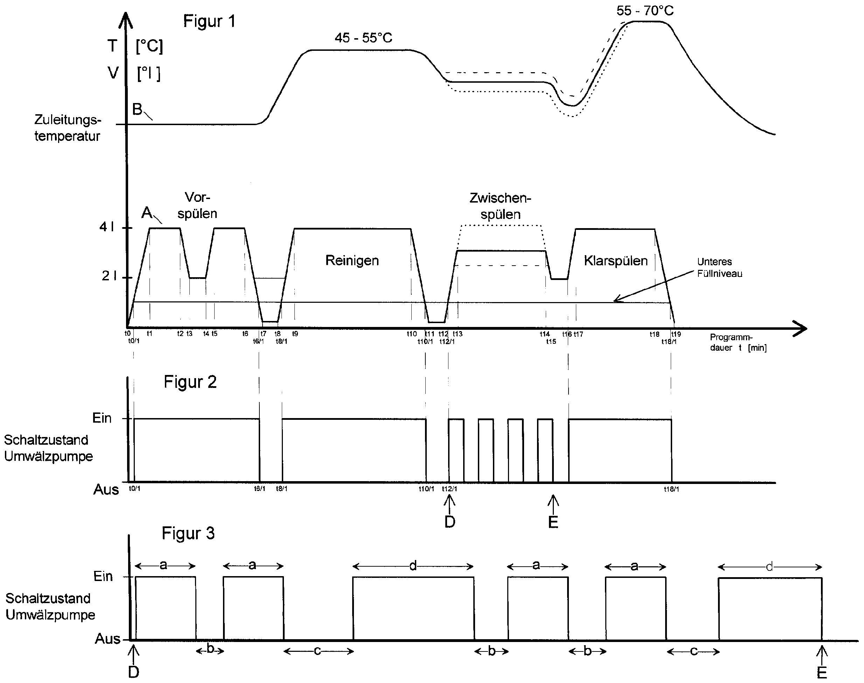

Auf der Abszisse der Fig. 1 ist nicht maßstäblich die Zeit t in Minuten [min] aufgetragen, die Ordinate zeigt nicht maßstäblich ein im Spülbehälter vorhandenes Spülflüssigkeitsvolumen in Litern [l] und die Temperatur der Spülflüssigkeit in Grad Celsius. Kurve A zeigt das Schema eines Verlaufes der im Spülbehälter vorhandenen Spülflüssigkeit, in Kurve B ist der dazu annähernde Temperaturverlauf der Spülflüssigkeit angezeigt, der im Wesentlichen durch das Zuschalten vorgesehener Heizmittel bestimmt ist, Temperaturänderungen infolge der Energieentnahme von Wärmekapazitäten, Einflüsse von Temperaturschwankungen in der Umgebung sind nur tendenziell dargestellt. Zu einem Zeitpunkt t₀ beginnt das Füllen des Spülbehälters mit Spülflüssigkeit und erreicht zu einem Zeitpunkt t_{0/1} im Sumpf der Geschirrspülmaschine ein definiertes Mindestvolumen, welches einem unteren Füllniveau entspricht. Bei diesem Füllniveau saugt die Umwälzpumpe keine Luft an. Das Füllen des Spülbehälters wird zu einem Zeitpunkt t₁ beendet. Zum Zeitpunkt t_{0/1} wird die Spülflüssigkeit infolge des Einschaltens der Umwälzpumpe im Spülbehälter umgewälzt wie in Fig 2, deren Verlauf zu Kurve A der Fig. 1 korrespondiert, gezeigt. Dabei wird die Spülflüssigkeit über die Zuleitung, ggf. unter Berücksichtigung verschiedener Schaltzustände von Schaltventilen in den Zuleitungen zu einzelnen Sprüharmen, ggf. in eine Deckensprühvorrichtung gedrückt und von dort aus das Spülgut mit Spülflüssigkeit beaufschlagt. Zu einem Zeitpunkt t₂ wird ein Teilvolumen der umgewälzten Spülflüssigkeit aus dem Spülbehälter abgepumpt und nach einer Totzeit t₃ - t₄, die sich im Wesentlichen durch das Widerauffüllen von Vorratsgefäßen für Spülflüssigkeit bzw. dem Zuleitungsweg zum Sumpf begründet ist, ab dem Zeitpunkt t₄ wieder aufgefüllt. Zu einem Zeitpunkt t₅ hat das Spülflüssigkeitsvolumen das ursprünglich maximale Füllvolumen von ca. 4 l wieder erreicht und wird weiterhin umgewälzt. Im Zeitraum t₂ bis t₅ wurde somit ein Verdünnungsschritt hinsichtlich des Verschmutzungsgrades der Spülflüssigkeit ausgeführt. Zu einem Zeitpunkt t₆ beginnt das Abpumpen der Spülflüssigkeit. Zum Zeitpunkt t_{6/1} muss wegen Erreichen des unteren Füllniveaus die Umwälzpumpe ausgeschaltet werden (vgl. Fig 2), damit die Umwälzpumpe keine Luft ansaugt, somit ist das Beaufschlagen des Spülgutes mit Spülflüssigkeit unterbrochen. Bis zum Zeitpunkt t₇ ist die Spülflüssigkeit aus dem Spülbehälter nahezu vollständig entleert. Nach einer erneuten Totzeit t₇ bis t₈ wird im Zeitabschnitt t₈ bis tg erneut Spülflüssigkeit zugeführt. Innerhalb dieses Intervalles erreicht zu einem Zeitpunkt t_{8/1} das Spülflüssigkeitsniveau sein minimal erforderliches unteres Füllniveau, die Umwälzpumpe wird wieder eingeschaltet, mit der Folge, dass erneut im Programmabschnitt Reinigen im Zeitabschnitt t_{8/1} bis t_{10/1} das Spülgut mit Spülflüssigkeit beaufschlagt wird. Dabei erreicht bei t₉ das Spülflüssigkeitsvolumen sein ursprünglich maximales Volumen von 4 l, zum Zeitpunkt t₁₀ setzt das Abpumpen ein und ist nach Ausschalten der Umwälzpumpe zum Zeitpunkt t_{10/1} (vgl. Fig. 2) zum Zeitpunkt t₁₁ nahezu vollständig aus dem Spülbehälter entfernt. Nach einer abermaligen Totzeit t₁₁ bis t₁₂ wird dem Sumpf der Geschirrspülmaschine erneut zum Zeitpunkt t₁₂ Spülflüssigkeit zugefügt. Wiederum wird im Zeitpunkt t_{12/1} das untere Füllniveau erreicht, so dass im nunmehrigen Programmabschnitt Zwischenspülen die Umwälzpumpe wieder eingeschaltet (vgl. Fig. 2) und damit das Spülgut wieder mit Spülflüssigkeit beaufschlagt wird. Durch mehrfaches Ein- und Ausschalten der Umwälzpumpe ist das zum Zeitpunkt t₁₃ zugeführte maximale Spülflüssigkeitsvolumen gegenüber den vorherigen Programmabschnitten verringert. Die punktierten und strichtierten Darstellungen deuten die variable Vorgabe des Spülflüssigkeitsvolumens an. Zum Zeitpunkt t₁₄ findet ein Verdünnungsschritt (t₁₄ bis t₁₇) analog zum Vorspülen nur mit einer verringerten Abpumpmenge im Zeitabschnitt t₁₄ bis t₁₅ und demzufolge verringerten frisch zuzuführenden Spülflüssigkeitsvolumen im Zeitabschnitt t₁₆ und t₁₇ statt. Da dabei das untere Füllniveau nicht unterschritten wird, kann die Umwälzpumpe beliebig zu einem Zeitpunkt zwischen t₁₄ und t₁₇ im Einschaltzustand bleiben. Im Ausführungsbespiel wird die Umwälzpumpe mehrfach ein- und ausgeschaltet, vgl. Fig. 2, wobei die Dauer des Ein- und Ausschaltzustandes gleichlang ist. Der Programmablauf geht während des Verdünnungsschrites in das Klarspülen über. Im Ausführungsbeispiel wurde der Beginn des Klarspülens mit ursprünglich maximalem Spülflüssigkeitsvolumen zum Zeitpunkt t₁₆ festgelegt.

Nach einer Umwälzdauer im Zeitabschnitt t₁₆ und t_{18/1}, dabei im Zeitabschnitt t₁₇ - t₁₈ bei maximal vorhandener Spülflüssigkeitsmenge von ca. 4 l, beginnt zum Zeitpunkt t₁₈ das Abpumpen. Zum Zeitpunkt t_{18/1} wird das untere Füllniveau unterschritten, so dass spätestens zu diesem Zeitpunkt die Umwälzpumpe ausgeschaltet wird, vgl. Fig. 2. Zum Zeitpunkt t₁₉ ist die im Spülbehälter vorhandene Spülflüssigkeit nahezu abgepumpt. Verbleibende Restmengen infolge von Dampf und Wassertropfen an Spülbehälterwänden, Decke und dem Spülgut sind hier nicht gezeigt. Sie werden im darauf folgenden, ebenfalls nicht gezeigten Trocknungsgang entfernt.

Der Temperaturverlauf der Spülflüssigkeit, gezeigt in Kurve B, korrespondierend zu Kurve A, ist im Vorspülen zunächst im Wesentlichen abhängig von der Zulauftemperatur des Wasser. Durch Aufheizen infolge zugeschalteter Heizmittel im Programmabschnitt Reinigen wird die Spülflüssigkeit auf ca. 45 bis 55 °C erwärmt. Auch der gesamte Spülbehälter und das eingebrachte Spülgut nehmen diesen Temperaturwert an. Durch Zufuhr im Wesentlichen zuleitungstemperaturabhängiger Spülflüssigkeit zu Beginn des Programmabschnittes Zwischenspülen nach vorherigem Abpumpen der heißen Reinigungsflüssigkeit wird die Spülflüssigkeit durch Entnahme von Energie aus den Wärmekapazitäten des Spülbehälters passiv aufgeheizt, ein Zuschalten der vorgesehenen Heizmittel erfolgt nicht. Infolge des im Zwischenspülen geringeren Spülflüssigkeitsvolumens bleibt die Temperatur in diesem Programmabschnitt etwas höher gegenüber einer punktiert dargestellten Spülflüssigkeitsmenge, dargestellt in Kurve A ebenfalls punktiert dargestellt, die vergleichsweise dasselbe Volumen wie in den Programmabschnitten Reinigen und Vorspülen aufweist. Demzufolge steigt im Verdünnungsschritt t₁₄ bis t₁₇ die Temperatur des reduzierten maximalen Spülflüssigkeitsvolumen schneller wieder an und erreicht infolge des Aufheizens durch Zuschalten vorgesehener Heizmittel während des Klarspülens eine maximale Temperatur von ca. 55 bis 70 °C. Für ein nochmals verringertes Spülflüssigkeitsvolumen strichiert in Kurve A und B, ist die Mischungstemperatur am höchsten und die maximale Temperatur im Klarspülen wird demzufolge am schnellsten erreicht. Diese Temperatur nimmt im nachgeschalteten, nicht dargestellten Programmabschnitt Kondensationstrocknen kontinuierlich ab.

In Fig. 3 ist eine Variante der Impulsfolge gemäß Ausschnitt, mit Pfeilen D - E in Fig. 2 markiert, des Pulsmusters zum Ein- und Ausschalten der Umwälzpumpe in verschiedenen Varianten dargestellt. Während in Fig. 2, Abschnitt D - E, die Impulsfolge periodisch bei gleichlanger Ein- und Ausschaltdauer der Umwälzpumpe dargestellt und dementsprechend auch ausgeführt ist, zeigt Fig. 3 eine von vielen alternativen Impulsfolgen der Ein-/Ausschaltzustände der Umwälzpumpe. Die Umwälzpumpe wird für eine Zeitdauer a eingeschaltet und ein für eine Zeitdauer b, welche kleiner als die Einschaltdauer a ist ausgeschaltet. Es folgt ein erneutes Einschalten für eine Zeitdauer a und ein Ausschalten für eine Zeitdauer c, wobei die Ausschaltdauer nunmehr im wesentlichen der vorherigen Einschaltdauer a entspricht. Das darauf folgende Einschalten erfolgt für eine Zeitdauer d, die im wesentlichen der Summe von zwei Einschaltzuständen a entspricht. Nach dem Ausschaltzustand b wiederholt sich die unregelmäßige Abfolge des Pulsmusters. Die mit dem selben Buchstaben benannten Schaltzusltände haben jeweils gleiche Zeitdauer, im Ausführungsbeispiel ist die Dauer a kleiner als Dauer d und größer als Dauer b und genauso lang wie Dauer

## Patentansprüche

1. Verfahren zum Betreiben einer Geschirrspülmaschine zum Reinigen darin eingestellten Spülgutes, wobei das Verfahren eine Abfolge von mehreren flüssigkeitsführenden Programmabschnitten, einerseits mit erwärmter, andererseits mit kalter Spülflüssigkeit umfasst, **dadurch gekennzeichnet, dass** wenigstens teilweise im Verlauf eines Programmabschnittes mit kalter Spülflüssigkeit, welcher einem Programmabschnitt mit erwärmter Spülflüssigkeit folgt, die Umwälzung der Spülflüssigkeit durch wiederholtes Ein- und Ausschalten einer Umwälzpumpe im Sinne eines Impulsspülens mit einer Impulsfolge von sich periodisch wiederholenden Ein- und Ausschaltzuständen der Umwälzpumpe mehrfach unterbrochen wird.

2. Verfahren zum Betreiben einer Geschirrspülmaschine nach Anspruch 1, **dadurch gekennzeichnet, dass** die Umwälzpumpe für eine bestimmbare und/oder vorgebbare Dauer ein- und ausgeschaltet wird.

3. Verfahren zum Betreiben einer Geschirrspülmaschine nach Anspruch 1 oder 2, **dadurch gekennzeichnet, dass** die Dauer der Ein- und Ausschaltzustände der Pumpe kurz gewählt wird und wobei Ein- und Ausschaltzeiten vorzugsweise gleich groß sind.

4. Verfahren zum Betreiben einer Geschirrspülmaschine nach zumindest einem der vorstehenden Ansprüche, **dadurch gekennzeichnet, dass** die Einschaltdauer der Umwälzpumpe zwischen ca. 1 bis 10 Sekunden, und das Ausschalten der Umwälzpumpe ca. 1 bis 15 Sekunden beträgt.

5. Verfahren zum Betreiben einer Geschirrspülmaschine nach zumindest einem der Ansprüche 2 bis 4, **dadurch gekennzeichnet, dass** die Anzahl der Wechsel des Ein- und Ausschaltens der Umwälzpumpe und/oder deren Dauer so ausgelegt oder variiert wird, dass die dadurch erzielte Kontaktzeit der umgewälzten Spülflüssigkeit mit dem zu reinigenden Spülgut derart reduziert wird, dass Abkühlvorgänge des Spülgutes infolge des Kontaktes mit kalter oder lauwarmer Spülflüssigkeit minimiert und/oder die Konzentration und Löslichkeit der zugesetzten chemischen Substanzen berücksichtigt werden.

6. Verfahren zum Betreiben einer Geschirrspülmaschine nach zumindest einem der vorhergehenden Ansprüche, **dadurch gekennzeichnet, dass** ein Sprüharm zumindest annähernd einmal vollständig um seine Rotationsachse gedreht wird und hierzu die Anzahl und Dauer der wiederholten Ein- und Ausschaltvorgänge der Umwälzpumpe entsprechend ausgelegt ist.

7. Verfahren zum Betreiben einer Geschirrspülmaschine nach zumindest einem der vorhergehenden Ansprüche, **dadurch gekennzeichnet, dass** infolge des Ein- und Ausschaltens der Umwälzpumpe ein Impulsspülen zumindest während eines flüssigkeitsführenden Programmabschnittes mit frisch zugeführter Spülflüssigkeit oder aus einem Verschnitt von verschmutzter Spülflüssigkeit und frischer Spülflüssigkeit durchgeführt wird.

8. Verfahren zum Betreiben einer Geschirrspülmaschine nach Anspruch 7, **dadurch gekennzeichnet, dass** das Volumen der frisch zugeführten oder verschnittenen Spülflüssigkeit für das Impulsspülen bezüglich des Verhältnisses der Impulsdauer des Ein- und Ausschaltens der Umwälzpumpe und der Anzahl der Impulse, der vorgebbaren Drehzahl der Umwälzpumpe und/oder einem unteren vorgegebenen Füllniveau und/oder der Konzentration und des Lösungsverhaltens der zugegebenen chemischen Substanzen, insbesondere von Kombinationspräparaten mit mehreren Wirkstoffen, günstigst reduziert wird.

9. Verfahren zum Betreiben einer Geschirrspülmaschine nach zumindest einem der vorhergehenden Ansprüche, **dadurch gekennzeichnet, dass** zumindest das Volumen der abgepumpten und/oder zugeführten Spülflüssigkeit abhängig von zumindest einer Trübungsmessung während eines flüssigkeitsführenden Verfahrensabschnittes, vorzugsweise vor dem Impulsspülen, bestimmt wird.

10. Verfahren zum Betreiben einer Geschirrspülmaschine, nach zumindest einem der vorhergehenden Ansprüche, wobei die Abfolge der flüssigkeitsführenden Programmabschnitte die Programmabschnitte Vorspülen, Reinigen, Zwischenspülen, und Klarspülen umfasst, **dadurch gekennzeichnet, dass** zumindest der Verfahrensabschnitt Zwischenspülen ganz oder teilweise als Impulsspülen betrieben wird.

## Claims

1. Method for operating a dishwasher for cleaning washware which is placed therein, wherein the method comprises a sequence of several liquid-carrying program sections, on the one hand using heated wash liquid and on the other hand using cold wash liquid, **characterized in that**, at least sometimes during the course of a program section using cold wash liquid which follows a program section using heated wash liquid, the circulation of the wash liquid is interrupted several times by repeatedly switching on and switching off a circulation pump in the sense of pulsed washing with a pulse sequence of periodically repeating switch-on and switch-off states of the circulation pump.

2. Method for operating a dishwasher according to Claim 1, **characterized in that** the circulation pump is switched on and switched off for a determinable and/or prespecifiable period.

3. Method for operating a dishwasher according to Claim 1 or 2, **characterized in that** the duration of the switch-on and switch-off states of the pump is selected to be short, and wherein switch-on and switch-off times are preferably of equal magnitude.

4. Method for operating a dishwasher according to at least one of the preceding claims, **characterized in that** the switch-on period of the circulation pump is between approximately 1 and 10 seconds and the switch-off period of the circulation pump is approximately 1 to 15 seconds.

5. Method for operating a dishwasher according to at least one of Claims 2 to 4, **characterized in that** the number of changeovers between switching on and switching off the circulation pump and/or the durations thereof are/is designed or varied such that the resulting contact time of the circulated wash liquid with the washware to be cleaned is reduced in such a way that cooling-down processes for the washware are minimized as a result of contact with cold or lukewarm wash liquid and/or the concentration and solubility of the admixed chemical substances are taken into account.

6. Method for operating a dishwasher according to at least one of the preceding claims, **characterized in that** a spray arm is rotated completely about its rotation axis at least approximately once and the number and duration of the repeated switch-on and switch-off processes of the circulation pump is designed in a corresponding manner to this.

7. Method for operating a dishwasher according to at least one of the preceding claims, **characterized in that**, as a result of switching on and switching off the circulation pump, pulsed washing is carried out at least during a liquid-carrying program section using freshly supplied wash liquid or from a blend of dirty wash liquid and fresh wash liquid.

8. Method for operating a dishwasher according to Claim 7, **characterized in that** the volume of the freshly supplied or blended wash liquid for the pulsed washing is reduced in an extremely favourable manner in respect of the ratio of the pulse duration of the switching on and switching off of the circulation pump and the number of pulses, the prespecifiable rotation speed of the circulation pump and/or a lower prespecified filling level and/or the concentration and the dissolution behaviour of the added chemical substances, in particular of combination preparations with several active substances.

9. Method for operating a dishwasher according to at least one of the preceding claims, **characterized in that** at least the volume of the pumped-away and/or supplied wash liquid is determined depending on at least one turbidity measurement during a liquid-carrying method section, preferably before pulsed washing.

10. Method for operating a dishwasher according to at least one of the preceding claims, wherein the sequence of liquid-carrying program sections comprises the prewashing, cleaning, intermediate washing and final rinsing program sections, **characterized in that** at least the intermediate washing method section is entirely or partially operated as pulsed washing.

## Revendications

1. Procédé pour faire fonctionner un lave-vaisselle afin de nettoyer des articles de vaisselle déposés dans celui-ci, dans lequel le procédé comprend une succession de plusieurs parties de programme transportant du liquide d'une part avec un liquide de lavage chauffé, d'autre part avec un liquide de lavage froid, **caractérisé en ce que**, au moins partiellement au cours d'une partie de programme avec un liquide de lavage froid, qui suit une partie de programme avec un liquide de lavage chauffé, on interrompt plusieurs fois la circulation du liquide de lavage par marche et arrêt répétés d'une pompe de circulation dans le sens d'un lavage pulsé avec une suite d'impulsions d'états de marche et d'arrêt répétés périodiquement de la pompe de circulation.

2. Procédé pour faire fonctionner un lave-vaisselle selon la revendication 1, **caractérisé en ce que** l'on enclenche et l'on déclenche la pompe de circulation pendant une durée pouvant être déterminée et/ou prédéterminée.

3. Procédé pour faire fonctionner un lave-vaisselle selon une revendication 1 ou 2, **caractérisé en ce que** l'on choisit une durée des états de marche et d'arrêt de la pompe qui est courte et dans lequel les durées de marche et d'arrêt sont de préférence égales.

4. Procédé pour faire fonctionner un lave-vaisselle selon au moins une des revendications précédentes, **caractérisé en ce que** la durée d'enclenchement de la pompe de circulation vaut entre 1 et 10 secondes, et l'arrêt de la pompe de circulation veut environ 1 à 15 secondes.

5. Procédé pour faire fonctionner un lave-vaisselle selon au moins une des revendications 2 à 4, **caractérisé en ce que** l'on choisit ou on fait varier le nombre des changements de marche et d'arrêt de la pompe de circulation et/ou leur durée de telle manière que le temps de contact ainsi produit du liquide de lavage en circulation avec les articles de vaisselle à nettoyer soit réduit, de telle manière que des phases de refroidissement des articles de vaisselle par suite du contact avec un liquide de lavage froid ou tiède soient minimisées et/ou que l'on tienne compte de la concentration et de la solubilité des substances chimiques ajoutées.

6. Procédé pour faire fonctionner un lave-vaisselle selon au moins une des revendications précédentes, **caractérisé en ce que** l'on fait tourner un bras d'arrosage au moins approximativement une fois entièrement autour de son axe de rotation et on choisit à cet effet de façon correspondante le nombre et la durée des phases de marche et d'arrêt répétées de la pompe de circulation.

7. Procédé pour faire fonctionner un lave-vaisselle selon au moins une des revendications précédentes, **caractérisé en ce qu'**en conséquence de la marche et de l'arrêt de la pompe de circulation, on effectue un lavage pulsé au moins pendant une partie de programme transportant du liquide avec du liquide de lavage fraîchement ajouté ou par un coupage de liquide de lavage souillé avec du liquide de lavage frais.

8. Procédé pour faire fonctionner un lave-vaisselle selon la revendication 7, **caractérisé en ce que** l'on réduit de la façon la plus favorable le volume du liquide de lavage fraîchement ajouté ou coupé pour le lavage pulsé par rapport au rapport de la durée d'impulsion de la marche et de l'arrêt de la pompe de circulation et du nombre des impulsions, du nombre de tours prévisible de la pompe de circulation et/ou d'un niveau de remplissage inférieur prédéterminé et/ou de la concentration et du comportement de dissolution des substances chimiques ajoutées, en particulier de préparations combinées avec plusieurs matériaux.

9. Procédé pour faire fonctionner un lave-vaisselle selon au moins une des revendications précédentes, **caractérisé en ce que** l'on détermine au moins le volume du liquide de lavage pompé et/ou ajouté en fonction d'au moins une mesure de turbidité pendant une partie de programme transportant du liquide, de préférence avant le lavage pulsé.

10. Procédé pour faire fonctionner un lave-vaisselle selon au moins une des revendications précédentes, dans lequel la succession des parties de programme transportant du liquide comprend les parties de programme prélavage, nettoyage, lavage intermédiaire et rinçage, **caractérisé en ce qu'**au moins la partie de programme lavage intermédiaire est effectuée en totalité ou en partie comme lavage pulsé.
